# EUROPÄISCHE PATENTSCHRIFT

(11) **EP 4 621 358 B1**
(45) Veröffentlichungstag und Bekanntmachung des Hinweises auf die Patenterteilung: **14.10.2026**
(21) Anmeldenummer: 25163351.7
(22) Anmeldetag: 12.03.2025
(51) Int. Cl.: G01F 1/66, G01F 15/02, G01F 1/667, G01F 25/10, G01P 5/24

(54) **MESSEN DER STRÖMUNGSGESCHWINDIGKEITEN VON FLUIDEN**
MEASURING FLUID FLOW VELOCITIES
MESURE DE VITESSES D'ÉCOULEMENT DE FLUIDES

(30) Priorität: 20.03.2024 DE 102024107897
(43) Veröffentlichungstag der Anmeldung: 24.09.2025
(73) Patentinhaber: SICK AG, 79183 Waldkirch (DE)
(72) Erfinder: Albrecht, Jens, 79274 St. Märgen (DE); Weigold, William, 79268 Bötzingen (DE)

(56) Entgegenhaltungen:
- DE-A1- 102004 014 674
- DE-A1- 102009 049 067
- US-A1- 2023 273 057
- US-B2- 6 950 768
- FANG ZEHUA ET AL: "A simple and easy-implemented time-of-flight determination method for liquid ultrasonic flow meters based on ultrasonic signal onset detection and multiple-zero-crossing technique", MEASUREMENT, INSTITUTE OF MEASUREMENT AND CONTROL. LONDON, GB, vol. 168, 1 September 2020 (2020-09-01), XP086306404, ISSN: 0263-2241, [retrieved on 20200901], DOI: 10.1016/J.MEASUREMENT.2020.108398
- ZHENG DANDAN ET AL: "Signal processing method for flight time measurement of gas ultrasonic flowmeter", 2021 IEEE INTERNATIONAL INSTRUMENTATION AND MEASUREMENT TECHNOLOGY CONFERENCE (I2MTC), IEEE, 17 May 2021 (2021-05-17), pages 1 - 6, XP033935195, DOI: 10.1109/I2MTC50364.2021.9459938
- DANDAN ZHENG ET AL: "A new characteristic peaks group judgement method for the accurate measurement of time-of-flight in the ultrasonic gas flowmeter", IET SCIENCE, MEASUREMENT AND TECHNOLOGY, THE INSTITUTION OF ENGINEERING AND TECHNOLOGY, MICHAEL FARADAY HOUSE, SIX HILLS WAY, STEVENAGE, HERTS. SG1 2AY, UK, vol. 15, no. 7, 22 April 2021 (2021-04-22), pages 597 - 605, XP006116503, ISSN: 1751-8822, DOI: 10.1049/SMT2.12061
- FANG ZEHUA ET AL: "Similarity Judgment-Based Double-Threshold Method for Time-of-Flight Determination in an Ultrasonic Gas Flowmeter", IEEE TRANSACTIONS ON INSTRUMENTATION AND MEASUREMENT, vol. 67, no. 1, 1 January 2018 (2018-01-01), USA, pages 24 - 32, XP093302825, ISSN: 0018-9456, DOI: 10.1109/TIM.2017.2757158

## Beschreibung

Die Erfindung betrifft ein Verfahren und eine Ultraschallmessvorrichtung zum Messen der Strömungsgeschwindigkeit eines Fluids nach dem Oberbegriff von Anspruch 1 beziehungsweise 8.

Fluidgeschwindigkeiten in Rohrleitungen und Kanälen können mittels Ultraschallrnesstechnik nach dem Differenzlaufzeitverfahren ermittelt werden. Dabei werden Ultraschallsignale von einem Paar Ultraschallwandler ausgesandt und empfangen, die einander gegenüber an einer Wandung der Rohrleitung an den Enden eines Messpfads schräg zu der Strömung des Fluids angeordnet sind. Aus der Laufzeitdifferenz des Ultraschalls auf dem Messpfad mit der Strömung und in Gegenrichtung entgegen der Strömung wird die Strömungsgeschwindigkeit bestimmt. Die Ultraschallwandler arbeiten dabei wechselseitig als Sender und Empfänger. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Fluidgeschwindigkeit verrechnet. Mit der Querschnittsfläche ergibt sich daraus auch der Betriebsvolumenstrom, welcher bei nach Volumen abgerechnetem Fluid häufig die eigentlich interessierende Messgröße ist. Für eine höhere Messgenauigkeit können auch zusätzliche Messpfade mit weiteren Ultraschallwandlern vorgesehen sein.

Eine Schwierigkeit bei der Bestimmung der Laufzeiten besteht in der zeitlichen Lokalisierung der Ultraschallsignale. Herkömmlich werden als Ultraschallsignale Pulspakete oder Chirps verwendet, also mehrere Schwingungen in der Trägerfrequenz des Ultraschalls, deren Amplituden gemäß einer beispielsweise glockenförmigen Einhüllenden moduliert sind. Das Maximum der Einhüllenden wäre nicht präzise genug, kann aber als Orientierung herangezogen werden, um eine bestimmte Schwingung des Ultraschallsignals zu lokalisieren. Der Empfangszeitpunkt wird dann beispielsweise aus dem Nulldurchgang dieser ausgewählten Schwingung bestimmt. Problematisch an diesem Vorgehen ist, dass das Maximum der Einhüllenden nicht einmal für die vergleichsweise grobe zeitliche Orientierung zur Auswahl einer bestimmten Schwingung des Ultraschallsignals präzise und stabil genug ist. Das gilt vor allem bei veränderten Bedingungen im Betrieb der Ultraschallmessvorrichtung etwa durch Temperaturschwankungen des Fluids, Alterung der Ultraschallwandler, Streuobjekte im Fluid, wie Blasen oder Festkörper sowie Wechsel auf ein anderes, nicht kalibriertes Fluid. Bei solchen Driften verändert sich die Einhüllende, und es wird deshalb möglicherweise eine andere Schwingung ausgewählt. Dieser Messfehler wird als Phasensprung bezeichnet, weil der Empfangszeitpunkt quasi in eine andere Schwingung springt.

Die US 2007/0191990 A1 beschreibt eine Durchflussmessung mit einer Blasenerkennung, um gegebenenfalls eine Warnung ausgeben zu können beziehungsweise Ausgabegrößen einzufrieren, bis die Blase wieder verschwunden ist Ein Kriterium für die Anwesenheit einer Blase sind veränderte Amplituden, ein weiteres die Differenz aus Laufzeiten zu einem Zeitpunkt t und einem Zeitpunkt t-1.

In der US 6 950 768 B2 wird ein Ultraschallmessgerät vorgestellt, das Laufzeitfehler mit verschiedenen Diagnosen erkennt und korrigiert.

Die US 6 941 821 B2 befasst sich mit einem Ultraschalldurchflussmessgerät, das die Anzahl der Messwiederholungen dynamisch einstellt.

Die US2023/0273057 A1 offenbart ein Verfahren zur Überwachung von Durchfluss und Druck in einem Beatmungsgerät mit Ultraschall. Es wird erwähnt, dass eine Ultraschalllaufzeit im Falle eines Phasensprungs eines Nulldurchgangs durch Addieren oder Subtrahieren einer ganzen Welle korrigiert werden kann. Es wird jedoch nicht erklärt, wie der Phasensprung erkannt wird.

Aus der DE 10 2009 049 067 A1 ist ein Verfahren zur Ultraschall-Laufzeitdifferenzmessung bekannt, bei dem ein Ultraschallsignal mit einer Einhüllenden und einer Trägerfrequenz ausgesandt wird. Eine Grobmessung der Laufzeitdifferenz wird aus der Einhüllenden gewonnen und mit einer Feinmessung aus der Phase der Trägerfrequenz kombiniert. Die Mehrdeutigkeit der Phasenmessung wird durch Rundung der Grobmessung auf ein ganzzahliges Vielfaches der Trägerperiode aufgelöst. Eine nachgeführte Rundungsausgleichskonstante soll dabei Phasensprünge präventiv vermeiden.

Es ist daher Aufgabe der Erfindung, die Messung der Strömungsgeschwindigkeit in einem Laufzeitdifferenzverfahren mit Ultraschall weiter zu verbessem.

Diese Aufgabe wird durch ein Verfahren und eine Ultraschallmessvorrichtung zum Messen der Strömungsgeschwindigkeit eines Fluids nach Anspruch 1 beziehungsweise 8 gelöst. Nach dem einleitend schon kurz erläuterten Ultraschall-Differenzlaufzeitverfahren werden auf einem schrägen Messpfad, d.h. einem Messpfad mit zumindest einer Komponente in Strömungsrichtung beziehungsweise gegen die Strömungsrichtung, ein erstes Ultraschallsignal mit der Strömung und ein zweites Ultraschallsignal gegen die Strömung ausgesandt und empfangen, um eine erste Laufzeit und eine zweite Laufzeit zu bestimmen. Aus der Laufzeitdifferenz der beiden Laufzeiten, also mit und gegen die Strömung, wird die Strömungsgeschwindigkeit ermittelt. Die Ultraschallsignale weisen jeweils mehrere Perioden einer Trägerfrequenz auf, wobei die Amplitude gemäß einer Hüllkurve moduliert ist. Anhand des Verlaufs der Hüllkurve im empfangenen Ultraschallsignal, insbesondere einem Charakteristikum wie dessen Maximum, dem Schwerpunkt oder dergleichen, wird eine Schwingung beziehungsweise ein Teil einer Schwingung des Ultraschallsignals ausgewählt und damit der für die Bestimmung der Laufzeiten benötigte Empfangszeitpunkt bestimmt.

Die Erfindung geht von dem Grundgedanken aus, Fehlmessungen aufgrund von Phasensprüngen aus plötzlichen Veränderungen in der ersten Laufzeit beziehungsweise der zweiten Laufzeit zu erkennen. Ein Phasensprung bedeutet, dass eine andere Schwingung ausgewählt wird, beispielsweise weil die Einhüllende durch Drifteffekte verformt wird, insbesondere sich durch Dispersion verbreitert. Dann weist die Laufzeitdifferenz einen Fehler in Höhe eines Vielfachen der Periode der Trägerfrequenz auf. Um dies aufzudecken, werden eine erste Differenz der ersten Laufzeit zu einer zuvor bestimmten, also früheren ersten Laufzeit und/oder eine zweite Differenz der zweiten Laufzeit zu einer zuvor bestimmten, also früheren zweiten Laufzeit berechnet. Es wird geprüft, ob die erste Differenz und/oder die zweite Differenz ein Vielfaches der Periode der Trägerfrequenz betragen, wobei eine Toleranz zugelassen wird. Ist das der Fall, wird die erste Laufzeit und/oder die zweite Laufzeit um dieses Vielfache der Periode der Trägerfrequenz korrigiert Es wird also wegen der Übereinstimmung mit einem Vielfachen der Periode der Trägerfrequenz ein Phasensprung angenommen und korrigiert oder rechnerisch rückgängig gemacht. Dabei ist der Begriff der Differenz gewissermaßen überladen, die Domänen dürfen nicht verwechselt werden: Die Laufzeitdifferenz, aus der die Strömungsgeschwindigkeit ermittelt wird, ist eine Differenz zweier unterschiedlicher Laufzeiten mit und gegen die Strömung. Demgegenüber sind die erste Differenz und die zweite Differenz zeitliche Differenzen oder diskrete Ableitungen innerhalb der ersten Laufzeit beziehungsweise innerhalb der zweiten Laufzeit.

Die Erfindung hat den Vorteil, dass die Beeinträchtigung der Messung der Strömungsgeschwindigkeit durch Phasensprünge sehr weitgehend aufgehoben wird. Die Korrektur berücksichtig Phasensprünge in beiden zeitlichen Richtungen, in beiden Ultraschallsignalen mit der Strömung und gegen die Strömung und auch mehrwertige Phasensprünge über mehr als eine Periode der Trägerfrequenz hinweg. Dadurch ist der Messwert deutlich robuster, stabiler und genauer und eine genaue Messung auch nach Driften oder unter schwierigen Messbedingungen wie Blasenbildung oder Partikeln in dem Fluid möglich.

Die Messung wird bevorzugt in Abtastperioden einer Zeitauflösung wiederholt, und die zuvor bestimmte erste Laufzeit und/oder die zuvor bestimmte zweite Laufzeit wird aus einer vorangegangenen Abtastperiode, insbesondere einer unmittelbar vorangegangenen Abtastperiode herangezogen. Dadurch wird eine zeitliche Körnung angegeben, auf die zuvor bestimmte Laufzeiten bezogen werden können, insbesondere indem jeweils die Laufzeiten der unmittelbar vorausgehenden Abtastperiode als zuvor bestimmte Laufzeiten zur Berechnung der ersten Differenz beziehungsweise zweiten Differenz verwendet werden. Die Messung erfolgt somit quasi-kontinuierlich in einer diskreten Zeitauflösung entsprechend der Abtastperiode. Die Abtastung sollte nicht mit einer nochmals viel feineren Digitalisierung der Ultraschallsignale für deren digitale Auswertung verwechselt werden. In einer Abtastperiode im hier gemeinten Sinn wird jeweils ein Wert für die Strömungsgeschwindigkeit durch Auswertung jeweiliger womöglich zuvor digitalisierter Ultraschallsignale bestimmt. Demnach sollte eine Abtastperiode bevorzugt fein genug sein, damit auf deren Zeitskala die Strömung quasi-konstant konstant bleibt. Andernfalls können tatsächliche A̅nderungen der Strömungs- oder Schallgeschwindigkeit mit Phasensprüngen verwechselt werden.

Die Toleranz beträgt vorzugsweise höchstens 20 %, höchstens 15 %, höchstens 10 % oder höchstens 5 % einer Periode. Ein Phasensprung wird in der Realität nicht exakt zu einem Messfehler in Höhe eines Vielfachen der Periode der Trägerfrequenz führen, weshalb eine gewisse Toleranz zugelassen wird. Hier sind einige mögliche Werte für die Toleranz genannt, wobei auch Zwischenwerte oder eine noch geringere Toleranz kleiner 5 % denkbar ist. Je nach Toleranz gibt es mehr Fehler erster Art oder zweiter Art, also fälschlich als Phasensprünge erkannte Änderungen, die eigentlich tatsächliche Messeffekte sind, beziehungsweise unerkannte Phasensprünge, die fälschlich als Messeffekte interpretiert werden.

Das Vielfache beträgt bevorzugt das Einfache oder das Doppelte einer Periode der Trägerfrequenz. Insbesondere wird nur das Einfache, also ein Phasensprung um genau eine Periode der Trägerfrequenz korrigiert. Noch größere Abweichungen haben häufig doch andere Ursachen als einen Phasensprung, wobei zumindest das Zweifache einer Periode der Trägerfrequenz noch ein sinnvolles Kriterium sein kann.

Vorzugsweise wird dann, wenn die erste Laufzeit und/oder die zweite Laufzeit über mehrere Abtastperioden, insbesondere zwei Abtastperioden bis zehn Abtastperioden, um das gleiche Vielfache der Periode der Trägerfrequenz korrigiert werden, die Korrektur zurückgesetzt Das ist ein Plausibilitätskriterium für Phasensprünge, mit dem mögliche falsche Korrekturen wieder rückgängig gemacht werden, die doch nicht auf einen Phasensprung zurückgehen. Wenn dieselbe Korrektur für eine gewisse Anzahl von Abtastperioden erforderlich scheint, besteht die Gefahr, dass die Auswertung erst durch die Korrektur und damit künstlich auf die falsche Schwingung einrastet. Der Wert für diese Anzahl ist ein Parameter, der im Bereich von zwei bis zehn und darüber hinaus gewählt werden kann. Das Plausibilitätskriterium kann für eine der Laufzeiten mit der Strömung und gegen die Strömung oder besonders bevorzugt auf beide Laufzeiten bezogen werden.

Vorzugsweise wird dann, wenn eine Signalqualität des ersten Ultraschallsignals und/oder des zweiten Ultraschallsignals während einer Korrektur oberhalb einer Mindest-Signalqualität liegt, insbesondere für zwei Abtastperioden bis zehn Abtastperioden, die Korrektur zurückgesetzt Dies ist ein weiteres Plausibilitätskriterium, das alternativ oder kumulativ zu der Überprüfung der Korrekturhistorie des vorigen Absatzes eingesetzt werden kann. Erneut gibt es einen Parameter, der die Länge des betrachteten Zeitintervalls festlegt, die zwischen zwei und zehn oder noch mehr Abtastperioden liegen kann. Um die Signalqualität summarisch. über das betrachtete Zeitintervall zu bewerten, kann ein statistisches Maß wie der Mittelwert oder Median verwendet werden. Eine hohe Signalqualität spricht dagegen, dass eine Korrektur erforderlich ist, es liegt dann eher ein echter Messeffekt beziehungsweise eine tatsächliche Änderung der Strömungs- oder Schallgeschwindigkeit vor. Deshalb wird bei hoher Signalqualität unter den genannten Bedingungen eine womöglich vorgenommene Korrektur zurückgesetzt beziehungsweise rückgängig gemacht.

Die Signalqualität wird bevorzugt aus einer Fouriertransformation des ersten Ultraschallsignals und/oder des zweiten Ultraschallsignals berechnet, indem ein Spektraianteil der Trägerfrequenz gegenüber anderen Spektralanteilen bewertet wird. Das ist eine Möglichkeit, das Nutzsignal ins Verhältnis zum Rauschen zu setzen und so eine Signal-Rausch-Qualität zu bewerten. Beispielsweise wird ein Spektralband einer festgesetzten Breite um die Trägerfrequenz festgelegt und das Integral der Fouriertransformierten in diesem Spektralband ins Verhältnis zu einem Integral über das übrige Spektrum außerhalb dieses Spektralbandes gesetzt. Dieser Wert kann dann mit der Mindest-Signalqualität verglichen werden, wobei gegebenenfalls noch eine Normierung vorgenommen wird.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: einen Grundaufbau einer laufzeitbasierten Ultraschallmessvorrichtung mit deren Messpfad und eingezeichneten geometrischen Variablen für die Durchflussbestimmung;
- Fig. 2: eine Skizze eines Ultraschallsignals zur Erläuterung der Auswahl einer Schwingung zur Bestimmung eines Empfangszeitpunkts;
- Fig. 3: eine Skizze ähnlich Figur 2, in der wegen eines Dispersionseffektes fälschlich eine andere Schwingung ausgewählt wird;
- Fig. 4: ein beispielhaftes Ablaufdiagramm zur Korrektur von Laufzeiten bei einem Phasensprung mit Überprüfung der Plausibilität der Korrektur;
- Fig. 5: beispielhafte Messdaten für den zeitlichen Verlauf einer ersten Laufzeit mit der Strömung und einer zweiten Laufzeit gegen die Strömung ohne erfindungsgemäße Korrektur;
- Fig. 6: aus den Messdaten der Figur 5 berechnete Laufzeitdifferenzen zwischen der ersten Laufzeit und der zweiten Laufzeit;
- Fig. 7: beispielhafte Messdaten ähnlich Figur 5 nun mit erfindungsgemäßer Korrektur;
- Fig. 8: aus den Messdaten der Figur 7 berechnete Laufzeitdifferenzen zwischen der ersten Laufzeit und der zweiten Laufzeit;
- Fig. 9: eine Darstellung der für Figur 7 vorgenommenen Korrekturen; und
- Fig. 10: eine Darstellung der Signalqualität zu den Messdaten.

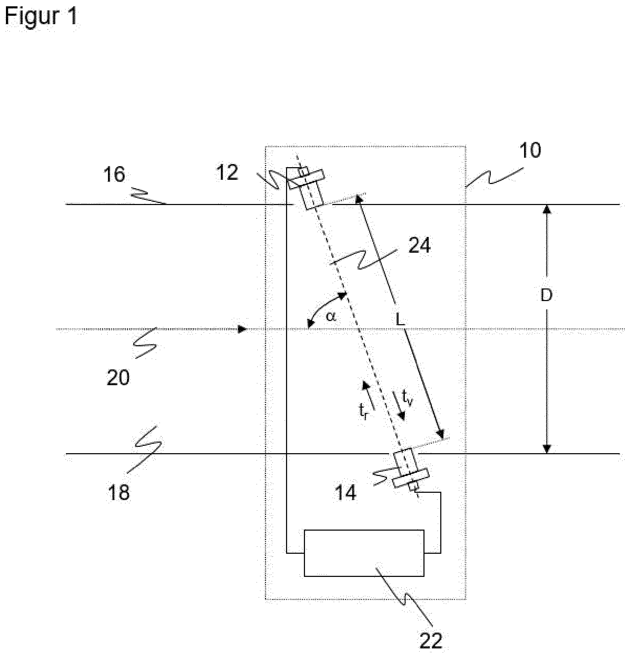

Figur 1 zeigt einen Grundaufbau einer laufzeitbasierten Ultraschallmessvorrichtung 10. Zwei Ultraschallwandler 12, 14 sind in einem zur Serikrechten gemessenen Winkel α in der Wandung einer Rohrleitung 16 angeordnet, in der ein Fluid 18 in Pfeilrichtung 20 strömt. Die Ultraschallwandler 12, 14 arbeiten, von einer Steuer- und Auswertungseinheit 22 angesteuert, wechselweise als Sender und Empfänger. Die auf einem Messpfad 24 durch das Fluid 18 transportierten Ultraschallsignale werden in Strömungsrichtung beschleunigt und gegen die Strömungsrichtung abgebremst. Über nicht dargestellte Schaltungselemente, wie Verstärker und A/D-Waridler, werden der Steuer- und Auswertungseinheit 22 die jeweiligen Empfangssignale zugeführt und digital ausgewertet. Dazu wird die resultierende Laufzeitdifferenz gemäß v=L/(2 cos α) (1/tᵥ-1/tᵣ) zu der gesuchten Strömungsgeschwindigkeit beziehungsweise gemäß Q=v 1/4 D²π zu einem Betriebsvolumenstrom verrechnet, worin die geometrischen Verhältnisse wie in Figur 1 durch die folgenden Variablen beschrieben sind:
v: Strömungsgeschwindigkeit des Fluids in der Leitung
L: Länge des Messpfades zwischen den beiden Ultraschallwandlern
α: Winkel, unter dem die Ultraschallwandler senden und empfangen
Q: Volumenstrom
D: Durchmesser der Leitung
tᵥ: Laufzeit des Ultraschalls mit der Strömung
tᵣ: Laufzeit des Ultraschalls gegen die Strömung.

Die Berechnung in den genannten Variablen ist beispielhaft zu verstehen, es gibt andere Möglichkeiten, die Laufzeitdifferenz zu messen und daraus Strömungsgeschwindigkeit beziehungsweise Volumenstrom zu bestimmen. Insbesondere können Ausgestaltung der Ultraschallwandler 12, 14 und Geometrie des Messpfades einschließlich der Möglichkeit mehrerer Messpfade in an sich bekannter Weise variiert sein. Die Steuer- und Auswertungseinheit 22 kann in die Ultraschallmessvorrichtung 10 integriert, als externes Gerät oder eine Mischung aus beiden vorgesehen sein. Darin ist mindestens ein vorzugsweise digitaler Rechenbaustein vorgesehen, wie ein Mikroprozessor oder eine CPU (Central Processing Unit), ein FPGA (Field Programmable Gate Array), ein DSP (Digital Signal Processor), ein ASIC (Appilcation-Specific Integrated Circuit) oder dergleichen. Eine externe Recheneinheit kann ein Computer beliebiger Bauart einschließlich Notebooks, Smartphones, Tablets, einer dedizierten Steuerung ebenso sein wie ein lokales Netzwerk, ein Edge-Device oder eine Cloud.

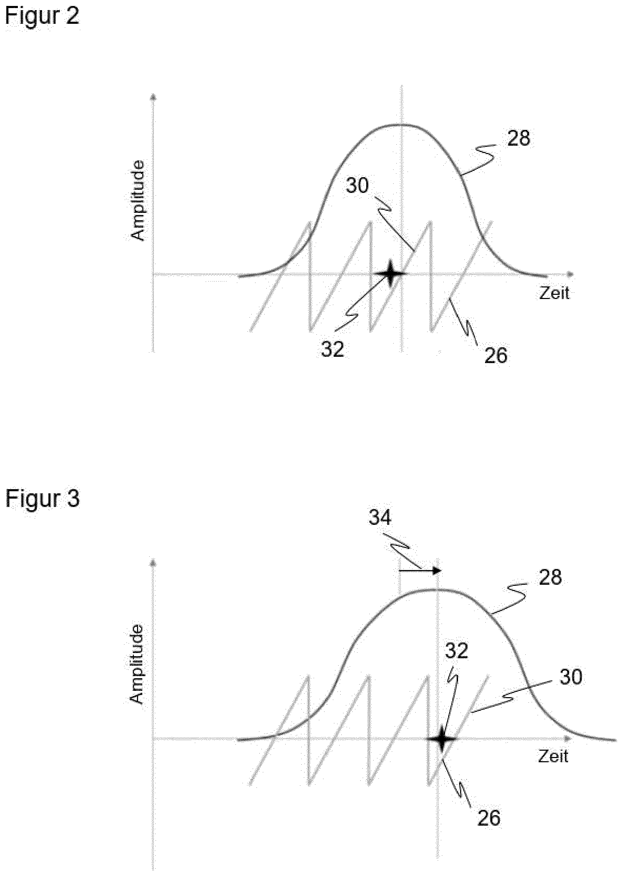

Figur 2 zeigt eine Skizze eines für die Laufzeitmessungen verwendeten Ultraschallsignals. Es werden jeweils Chirps oder Pulspakete ausgesandt und empfangen, die mehrere Schwingungen in der Trägerfrequenz des Ultraschalls umfassen und deren Amplitude über die Schwingungen hinweg moduliert wird. Vereinfachend sind die Schwingungen lediglich als Sägezahn 26 untereinander gleicher Amplituden dargestellt, in der Realität schmiegen sich die Schwingungen in die durch die Modulation der Amplituden erzeugt Hüllkurve 28 ein. Anhand des Maximums der Hüllkurve 28 wird eine Schwingung 30 ausgewählt und beispielsweise aus deren Nulldurchgang der Empfangszeitpunkt 32 bestimmt. In alternativen Ausführungsformen kann noch mindestens eine weitere benachbarte Schwingung für die Bestimmung des Empfangszeitpunkts 32 hinzugezogen werden.

Figur 3 zeigt eine Skizze ähnlich Figur 2, in der wegen eines Dispersionseffektes beispielsweise durch Temperaturschwankungen, Alterung oder Störobjekte wie Blasen oder Partikel in der Strömung die Hüllkurve 28 verbreitert wird. Dadurch verschiebt sich das Maximum der Hüllkurve 28 wie durch den Pfeil 34 angedeutet. Das wiederum hat zur Folge, dass nun eine andere Schwingung 30 zur Bestimmung des Empfangszeitpunkts 32 herangezogen wird. Das problematische Resultat ist ein Phasensprung in der Laufzeitmessung, d.h. die Laufzeit hat sich trotz gleicher Strömungsgeschwindigkeit um eine Periode der Trägerfrequenz verlängert.

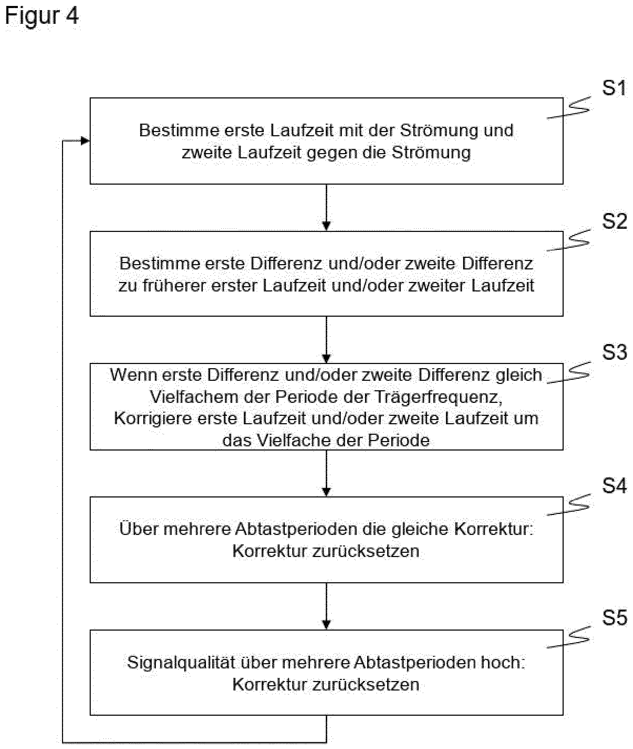

Figur 4 zeigt ein beispielhaftes Ablaufdiagramm zur Erkennung von Phasensprüngen und zur entsprechenden Korrektur von Laufzeiten. Es müssen nicht zwingend alle Schritte ausgeführt werden, insbesondere sind die beiden abschließenden Plausibilitätskriterien optional. In einem Schritt 51 werden die Laufzeiten mit der Strömung und gegen die Strömung bestimmt. Dabei werden insbesondere wie zu Figur 1 erläutert, Ultraschallsignale in beiden Richtungen längs des Messpfades 24 ausgesandt und empfangen. Der jeweilige Empfangszeitpunkt bestimmt sich beispielsweise wie zu Figur 2 erläutert, und damit ergeben sich zusammen mit dem bekannten Sendezeitpunkt und einer Kalibration für interne Signalverzögerungen die Laufzeiten.

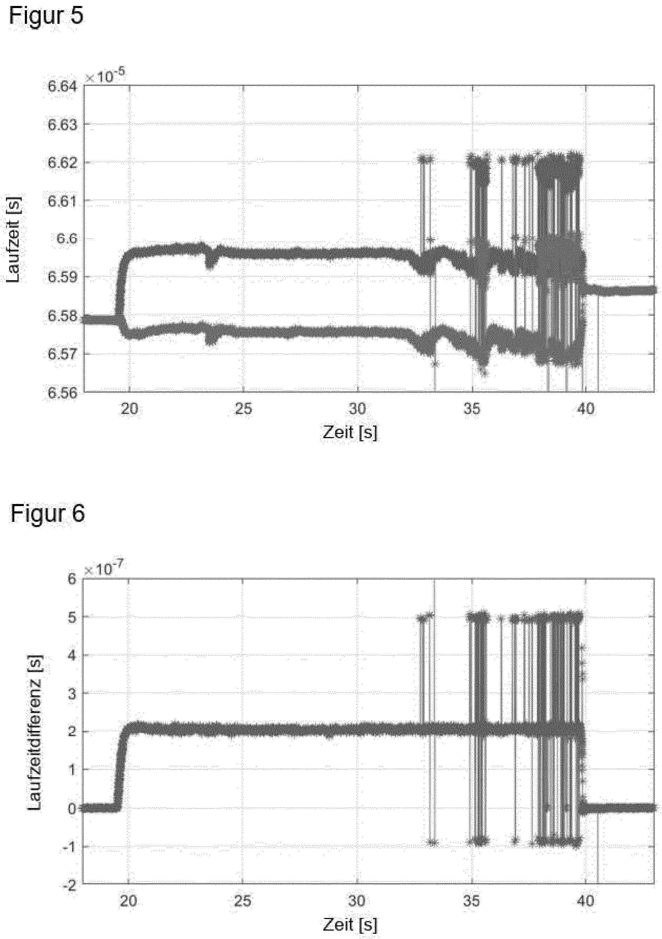

Figur 5 zeigt beispielhafte Messdaten für den zeitlichen Verlauf einer ersten Laufzeit mit der Strömung (unten) und einer zweiten Laufzeit gegen die Strömung (oben). Die Laufzeiten werden in Abtastperioden (Samplings) gemessen, die aber vorzugsweise so dicht liegen, dass ein zwar diskreter, für praktische Belange aber quasi-kontinuierlicher Verlauf entsteht. Im rechten Teil der Figur 5 sind zahlreiche Phasensprünge zu erkennen, eine erfindungsgemäße Korrektur ist in Figur 5 nicht erfolgt. Figur 6 zeigt die entsprechenden Laufzeitdifferenzen, also die punktweise Differenz der Laufzeiten aus Figur 5 zu einem jeweils gleichen Zeitpunkt. Im rechten Teil übertragen sich viele der Phasensprünge, sofern nicht zufällig gleichzeitig derselbe Phasensprung in beiden Laufzeiten auftritt und sich der Fehler dadurch in einem Zeitpunkt auslöscht.

Zurück zu Figur 4, wird in einem Schritt S2 zur Vorbereitung der Aufdeckung von Phasensprüngen eine erste Differenz zwischen einer aktuellen ersten Laufzeit und einer früheren ersten Laufzeit und/oder eine zweite Differenz zwischen einer aktuellen zweiten Laufzeit und einer früheren zweiten Laufzeit bestimmt. Vorzugsweise wird zu jedem Zeitpunkt t die Differenz zum vorangegangenen Zeitpunkt t-1 bestimmt. Das ist eine diskrete Näherung an die zeitliche Ableitung der gemessenen Laufzeiten, andere Näherungen beispielsweise unter Heranziehen anderer vorangegangener Zeitpunkte sind alternativ denkbar. Es wird dann geprüft, ob die erste und/oder zweite Differenz gleich einem Vielfachen der Periode der Trägerfrequenz ist. Trifft diese Bedingung zu, so wird dies als Erkennung eines Phasensprungs gewertet, denn dies ist wesentlich wahrscheinlicher als eine plötzliche Veränderung der Strömungsgeschwindigkeit um gerade ein Vielfaches der Periode der Trägerfrequenz. Stille Voraussetzung ist dabei, dass die Abtastperioden für die Messung von Laufzeiten kurz genug sind und also dicht genug im Vergleich zu erwartbaren Veränderungen der Strömungs- oder Schallgeschwindigkeit liegen. Der Vergleich erfolgt vorzugsweise unter einer gewissen Toleranz, d.h. die erste Differenz und/oder zweite Differenz wird noch als gleich einem Vielfachen einer Periode der Trägerfrequenz angesehen, wenn dies in einem Intervall von ±x % einer Periode zutrifft, mit x=5, 10, 15, 20 oder einem vergleichbaren Wert. Das Vielfache ist vorzugsweise das Einfache, da ein einfacher Phasensprung am wahrscheinlichsten ist. In einer bevorzugten Ausführungsform, wird auch noch das Zweifache zugelassen, noch höhere Vielfache sind denkbar, treten aber in der Praxis kaum, noch auf. Zusammenfassend zu der Korrektur gemäß Schritt S3 sei noch angemerkt, dass hier die gemessenen Laufzeiten auf Plausibilität geprüft werden, um einen Phasenfehler aufzudecken, nämlich auf plötzliche Änderungen in Vielfachen einer Periode der Trägerfrequenz. Das setzt an einem ganz anderen Punkt an als herkömmliche Verfahren, die durch zusätzliches Wissen über die Umgebungsbedingungen beispielsweise die Schallgeschwindigkeit des Fluids oder dessen Temperatur, oder durch besondere Auswertungen eine besonders genaue Bestimmung des Empfangszeitpunkts anstreben oder beispielsweise Ultraschallwandler 12, 14 besonders hoher Bandbreite verwenden, um die Hüllkurve 28 und damit deren zeitliche Lage genauer zu erfassen. Dass die Erfindung anders vorgeht, schließt andererseits nicht aus, derlei Maßnahmen zur Ergänzung der Erfindung hinzuzuziehen.

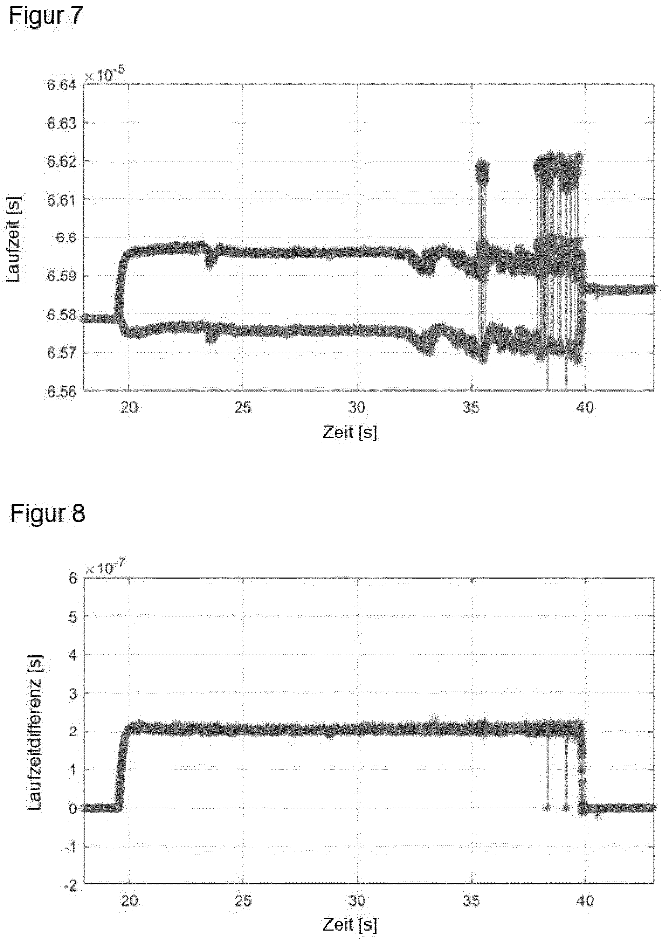

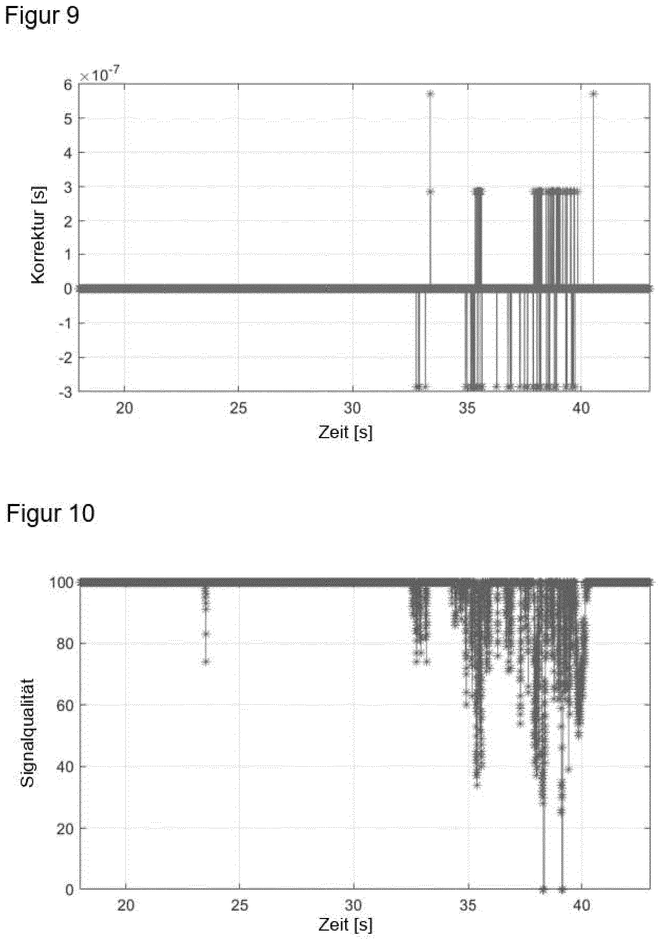

Figur 7 zeigt beispielhafte Messdaten ähnlich Figur 5 nun mit erfindungsgemäßer Korrektur. Im rechten Teil ist bereits zu erkennen, dass eine Vielzahl von Phasensprüngen korrigiert werden konnten. Das ist aber nur ein Teil des positiven Effekts. Ebenso hilfreich wie eine Korrektur eines Phasensprungs ist es nämlich, wenn beide Laufzeiten zwar einem Phasensprung unterliegen, solange es der gleiche Phasensprung ist. Das zeigt sich in Figur 8 mit aus den korrigierten Messdaten der Figur 7 berechneten Laufzeitdifferenzen zwischen der ersten Laufzeit und der zweiten Laufzeit. In der Laufzeitdifferenz verschwinden nämlich gleiche Phasensprünge, so dass hier insgesamt bis auf zwei kurze verbleibende Ausreißer gar keine relevanten Phasensprünge verbleiben. Figur 9 zeigt ergänzend noch eine Darstellung der für Figur 7 vorgenommenen Korrekturen.

In optionalen Schritten S4 und S5 werden weitere Plausibilisierungskriterien geprüft. Diese Schritte können je nach Ausführungsform beide gemeinsam, einzeln oder gar nicht ausgeführt werden. Die weiteren Plausibilisierungskriterien sollen verhindern, dass die Auswertung sich erst durch die Korrekturen auf eine falsche Schwingung einpendeln. Im Schritt S4 wird geprüft, ob jeweils die letzten beiden Laufzeiten um dasselbe Vielfache der Periode der Trägerfrequenz korrigiert wurden. Das kann für die erste Laufzeit und/oder die zweite Laufzeit erfolgen und beispielsweise zwei, fünf, zehn oder eine ähnliche Anzahl Abtastperioden zurückgehen. Dem Schritt S4 liegt die Heuristik zugrunde, dass eine längere gleichartige Korrektur nicht mehr auf einen Phasensprung hinweist, sondern einen echten Messeffekt, so dass die Korrektur zurückgesetzt beziehungsweise rückgängig gemacht wird.

Im Schritt S5 wird als weiteres mögliches Plausibilisierungskriterium eine Signalqualität über mehrere Abtastperioden geprüft, wiederum können es zwei, fünf, zehn oder eine vergleichbare Anzahl Abtastperioden sein. Die Signalqualität wird vorzugsweise mit einem statistischen Maß wie den Mittelwert oder den Median über die betrachteten Abtastperioden zusammengefasst. Figur 10 zeigt eine Darstellung der Signalqualität zu den bisher betrachteten Messdaten. In diesem Beispiel ist die Signalqualität dadurch berechnet, dass zunächst eine Fouriertransformation durchgeführt wird. In der Fouriertransformierten wird ein Spektralband um die Trägerfrequenz herum festgelegt und der Signalanteil in diesem Spektralband ins Verhältnis zum Signalanteil im übrigen Spektrum gesetzt, wobei sich Signalanteile beispielsweise durch Integrieren bestimmen. Vorzugsweise folgt noch eine Normierung, so dass die Signalqualität in dem Intervall 0-100 % liegt. Die Signalqualität, insbesondere ein Signal-Rausch-Verhältnis, kann aber auch anders bewertet werden, dazu sind verschiedene Methoden aus der Signalverarbeitung an sich bekannt.

Eine hohe Signalqualität, beispielsweise durch eine Schwelle wie 90 %, 95 %, 98 %, 99 %, 99,5 % vorgegeben, weist darauf hin, dass eine Korrektur nicht angemessen ist, weil es sich vermutlich um einen echten Messeffekt handelt, so dass bei hoher Signalqualität über die betrachteten Abtastperioden die Korrektur zurückgesetzt wird. Die Plausibilisierungskriterien der Schritte S4 und S5 können kombiniert werden. In einem Beispiel hierzu wird die Korrektur zurückgesetzt, wenn über zehn Abtastperioden identische Korrekturen vorgenommen wurden und zugleich eine Signalqualität von im Mittel mehr als 99 % festgestellt ist.

## Patentansprüche

1. Verfahren zur Messung der Strömungsgeschwindigkeit eines Fluids (18), bei dem auf einem Messpfad (24) schräg zu einer Strömungsrichtung des Fluids (18) ein erstes Ultraschallsignal mit der Strömung und ein zweites Ultraschallsignal gegen die Strömung ausgesandt und wieder empfangen, eine erste Laufzeit des ersten Ultraschallsignals und eine zweite Laufzeit des zweiten Ultraschallsignals bestimmt und die Strömungsgeschwindigkeit aus einer Laufzeitdifferenz der ersten Laufzeit und der zweiten Laufzeit ermittelt wird, wobei die Ultraschallsignale mehrere Perioden einer Trägerfrequenz (26) mit entsprechend einer Hüllkurve (28) modulierter Amplitude aufweisen und für die Bestimmung der Laufzeiten ein jeweiliger Empfangszeitpunkt (32) eines Ultraschallsignals aus einer ausgewählten Schwingung (30) des Ultraschallsignals festgelegt wird, die anhand eines Verlaufs der Hüllkurve (28), insbesondere eines Maximums der Hüllkurve (28), ausgewählt wird,
**dadurch gekennzeichnet,**
**dass** eine erste Differenz der ersten Laufzeit und einer zuvor bestimmten ersten Laufzeit und/oder eine zweite Differenz der zweiten Laufzeit und einer zuvor bestimmten zweiten Laufzeit berechnet wird und dass, falls die erste Differenz und/oder die zweite Differenz bis auf eine Toleranz ein Vielfaches der Periode der Trägerfrequenz (26) beträgt, die erste Laufzeit und/oder die zweite Laufzeit um das Vielfache der Periode der Trägerfrequenz (26) korrigiert wird.

2. Verfahren nach Anspruch 1,
wobei die Messung in Abtastperioden einer Zeitauflösung wiederholt wird und die zuvor bestimmte erste Laufzeit und/oder die zuvor bestimmte zweite Laufzeit aus einer vorangegangenen Abtastperiode, insbesondere einer unmittelbar vorangegangenen Abtastperiode herangezogen wird.

3. Verfahren nach Anspruch 1 oder 2,
wobei die Toleranz höchstens 20 %, höchstens 15 %, höchstens 10 % oder höchstens 5 % einer Periode der Trägerfrequenz (26) beträgt.

4. Verfahren nach einem der vorhergehenden Ansprüche,
wobei das Vielfache das Einfache oder das Doppelte einer Periode der Trägerfrequenz (26) beträgt.

5. Verfahren nach einem der vorhergehenden Ansprüche,
wobei dann, wenn die erste Laufzeit und/oder die zweite Laufzeit über mehrere Abtastperioden, insbesondere zwei Abtastperioden bis zehn Abtastperioden, um das gleiche Vielfache der Periode der Trägerfrequenz (26) korrigiert werden, die Korrektur zurückgesetzt wird.

6. Verfahren nach einem der vorhergehenden Ansprüche,
wobei dann, wenn eine Signalqualität des ersten Ultraschallsignals und/oder des zweiten Ultraschallsignals während einer Korrektur oberhalb einer Mindest-Signalqualität liegt, insbesondere für zwei Abtastperioden bis zehn Abtastperioden, die Korrektur zurückgesetzt wird.

7. Verfahren nach Anspruch 6,
wobei die Signalqualität aus einer Fouriertransformation des ersten Ultraschallsignals und/oder des zweiten Ultraschallsignals berechnet wird, indem ein Spektralanteil der Trägerfrequenz gegenüber anderen Spektralanteilen bewertet wird.

8. Ultraschallmessvorrichtung (10) zum Messen der Strömungsgeschwindigkeit eines Fluids (18) mit mindestens zwei einander zugewandt angeordneten Ultraschallwandlern (12, 14), die zwischen sich einen schräg zu der Strömung durch das Fluid (18) verlaufenden Messpfad (24) aufspannen, und mit einer Steuer-und Auswertungseinheit (22), die dafür ausgebildet ist, die Strömungsgeschwindigkeit mit einem Verfahren nach einem der vorhergehenden Ansprüche zu messen.

## Claims

1. Method for measuring the flow velocity of a fluid (18), wherein, on a measuring path (24) oblique to a flow direction of the fluid (18), a first ultrasonic signal is transmitted and received again with the flow and a second ultrasonic signal is transmitted and received again against the flow, a first transit time of the first ultrasonic signal and a second transit time of the second ultrasonic signal are determined, and the flow velocity is determined from a transit-time difference between the first transit time and the second transit time, wherein the ultrasonic signals comprise a plurality of periods of a carrier frequency (26) with an amplitude modulated in accordance with an envelope curve (28), and, for determining the transit times, a respective reception time point (32) of an ultrasonic signal is defined from a selected oscillation (30) of the ultrasonic signal selected on the basis of a profile of the envelope curve (28), in particular a maximum of the envelope curve (28), **characterised in that** a first difference between the first transit time and a previously determined first transit time and/or a second difference between the second transit time and a previously determined second transit time is calculated and, if the first difference and/or the second difference corresponds, within a tolerance, to a multiple of the period of the carrier frequency (26), the first transit time and/or the second transit time is corrected by the multiple of the period of the carrier frequency (26).

2. Method according to claim 1, wherein the measurement is repeated in sampling periods of a time resolution and the previously determined first transit time and/or the previously determined second transit time is taken from a preceding sampling period, in particular an immediately preceding sampling period.

3. Method according to claim 1 or 2, wherein the tolerance amounts to at most 20%, at most 15%, at most 10% or at most 5% of a period of the carrier frequency (26).

4. Method according to one of the preceding claims, wherein the multiple is the single or double value of a period of the carrier frequency (26).

5. Method according to one of the preceding claims, wherein, when the first transit time and/or the second transit time are corrected over a plurality of sampling periods, in particular two sampling periods to ten sampling periods, by the same multiple of the period of the carrier frequency (26), the correction is reset.

6. Method according to one of the preceding claims, wherein, when a signal quality of the first ultrasonic signal and/or of the second ultrasonic signal is above a minimum signal quality during a correction, in particular for two sampling periods to ten sampling periods, the correction is reset.

7. Method according to claim 6, wherein the signal quality is calculated from a Fourier transformation of the first ultrasonic signal and/or of the second ultrasonic signal by evaluating a spectral component of the carrier frequency relative to other spectral components.

8. Ultrasonic measuring device (10) for measuring the flow velocity of a fluid (18), having at least two ultrasonic transducers (12, 14) arranged facing one another, which span between them a measuring path (24) extending obliquely to the flow through the fluid (18), and having a control and evaluation unit (22) configured to measure the flow velocity by a method according to one of the preceding claims.

## Revendications

1. Procédé de mesure de la vitesse d'écoulement d'un fluide (18), dans lequel, sur un trajet de mesure (24) oblique à une direction d'écoulement du fluide (18), un premier signal ultrasonore est émis et reçu à nouveau dans le sens de l'écoulement et un deuxième signal ultrasonore est émis et reçu à nouveau à contre-courant, un premier temps de transit du premier signal ultrasonore et un deuxième temps de transit du deuxième signal ultrasonore étant déterminés, et la vitesse d'écoulement étant déterminée à partir d'une différence de temps de transit entre le premier temps de transit et le deuxième temps de transit, les signaux ultrasonores comprenant plusieurs périodes d'une fréquence porteuse (26) avec une amplitude modulée conformément à une enveloppe (28), et, pour la détermination des temps de transit, un instant de réception respectif (32) d'un signal ultrasonore étant fixé à partir d'une oscillation sélectionnée (30) du signal ultrasonore, sélectionnée sur la base de l'évolution de l'enveloppe (28), notamment d'un maximum de l'enveloppe (28),
**caractérisé en ce**
**qu'**une première différence entre le premier temps de transit et un premier temps de transit déterminé précédemment et/ou une deuxième différence entre le deuxième temps de transit et un deuxième temps de transit déterminé précédemment est calculée et **en ce que**, si la première différence et/ou la deuxième différence correspond, à une tolérance près, à un multiple de la période de la fréquence porteuse (26), le premier temps de transit et/ou le deuxième temps de transit est corrigé du multiple de la période de la fréquence porteuse (26).

2. Procédé selon la revendication 1,
dans lequel la mesure est répétée selon des périodes d'échantillonnage d'une résolution temporelle et le premier temps de transit déterminé précédemment et/ou le deuxième temps de transit déterminé précédemment est repris d'une période d'échantillonnage précédente, notamment de la période d'échantillonnage immédiatement précédente.

3. Procédé selon la revendication 1 ou 2,
dans lequel la tolérance est d'au plus 20 %, d'au plus 15 %, d'au plus 10 % ou d'au plus 5 % d'une période de la fréquence porteuse (26).

4. Procédé selon l'une des revendications précédentes,
dans lequel le multiple est égal à une ou deux fois une période de la fréquence porteuse (26).

5. Procédé selon l'une des revendications précédentes,
dans lequel, lorsque le premier temps de transit et/ou le deuxième temps de transit sont corrigés pendant plusieurs périodes d'échantillonnage, notamment de deux à dix périodes d'échantillonnage, du même multiple de la période de la fréquence porteuse (26), la correction est réinitialisée.

6. Procédé selon l'une des revendications précédentes,
dans lequel, lorsqu'une qualité de signal du premier signal ultrasonore et/ou du deuxième signal ultrasonore est supérieure à une qualité minimale de signal pendant une correction, notamment pendant deux à dix périodes d'échantillonnage, la correction est réinitialisée.

7. Procédé selon la revendication 6,
dans lequel la qualité du signal est calculée à partir d'une transformée de Fourier du premier signal ultrasonore et/ou du deuxième signal ultrasonore en évaluant une composante spectrale de la fréquence porteuse par rapport à d'autres composantes spectrales.

8. Dispositif de mesure ultrasonore (10) destiné à mesurer la vitesse d'écoulement d'un fluide (18), comprenant au moins deux transducteurs ultrasonores (12, 14) disposés face à face, qui définissent entre eux un trajet de mesure (24) s'étendant obliquement par rapport à l'écoulement du fluide (18), et comprenant une unité de commande et d'évaluation (22) configurée pour mesurer la vitesse d'écoulement au moyen d'un procédé selon l'une des revendications précédentes.
